# EUROPEAN PATENT APPLICATION

(11) **EP 1 750 170 A1**
(43) Date of publication of application: **07.02.2007**
(21) Application number: 06016102.3
(22) Date of filing: 02.08.2006
(51) Int. Cl.: G02F 1/1339

(54) **Liquid crystal device, electro-optical device, projector, and micro-device**

(30) Priority: 05.08.2005 JP 2005227618; 18.05.2006 JP 2006139044
(71) Applicant: SEIKO EPSON CORPORATION, Shinjuku-ku, Tokyo 163-0811 (JP)
(72) Inventor: Sasabayashi, Tomoko, Suwa-shi Nagano-ken (JP)
(74) Representative: HOFFMANN EITLE

(57) **Abstract**

A liquid crystal device includes: a first substrate (10); a second substrate (20) opposed to the first substrate (10); a liquid crystal layer (50) placed between the first substrate (10) and the second substrate (20); a sealing member (14) sealing the liquid crystal layer (50) between the first substrate (10) and the second substrate (20); a mold member (30) provided between the first substrate (10) and the second substrate (20) so as to cover an outer periphery of the sealing member (14); and a first irregular portion (40, 41) formed, on at least one of the first substrate (10) and the second substrate (20), over an entire region on which the mold member (30) is arranged, wherein the mold member (30) is provided on the first irregular portion (40, 41).

## Description

### CROSS-REFERENCE TO RELATED APPLICATION

This application claims priority from Japanese Patent Application No. 2005-227618, filed August 5, 2005, and Japanese Patent Application No. 2006-139044, filed May 18, 2006, the contents of which are incorporated herein by reference.

### BACKGROUND

### 1. Technical Field

The present invention relates to a liquid crystal device, an electro-optical device, a projector, and a micro-device.

### 2. Related Art

A liquid crystal device has been used as a light modulation section for a projection display device such as a liquid crystal projector.

The liquid crystal device is constituted in such a way that a sealing member is placed at a peripheral portion of a substrate between a pair of substrates, and a liquid crystal layer is sealed at the center.

An electrode for applying a voltage to the liquid crystal layer is formed inside a pair of substrates, and an alignment layer for controlling the alignment of liquid crystal molecules on application of a non-selective voltage is formed inside the electrode.

Then, light from a light source is modulated on the basis of a change in alignment of liquid crystal molecules between application of a non-selective voltage and that of a selective voltage to produce image light.

As disclosed in Japanese Unexamined Patent Application, First Publication No. 2001-221998, there is a liquid crystal device in which, for example, an epoxy-based adhesive layer (mold member) is formed so as to cover around a sealing member, thereby increasing the bonding with a pair of substrates via the adhesive-layer and improving the mechanical strength.

In general, the permeation of water inside a liquid crystal device will decrease display characteristics, thereby deteriorating the reliability of the liquid crystal device.

For this reason, it is desirable that the above sealing member and the adhesive layer which bond the pair of substrates should be high in water resistance and moisture resistance.

However, as described above, since the adhesive layer (mold member) is a member for improving the mechanical strength of a liquid crystal device, it is not sufficiently moisture-resistant to be effective in preventing the permeation of water from outside the substrate.

Therefore, there is concern that, water which has permeated into a space between a pair of substrates may enter into, for example, the liquid crystal layer from an interface between the sealing member and the substrate, thereby decreasing the display characteristics and deteriorating the reliability of the liquid crystal device.

### SUMMARY

An advantage of some aspects of the invention is to provide a liquid crystal device, an electro-optical device, a projector and a micro-device which have stable display characteristics and high reliability due to an improved moisture resistance.

A first aspect of the invention provides a liquid crystal device, including: a first substrate; a second substrate opposed to the first substrate; a liquid crystal layer placed between the first substrate and the second substrate; a sealing member sealing the liquid crystal layer between the first substrate and the second substrate; a mold member provided between the first substrate and the second substrate so as to cover an outer periphery of the sealing member; and a first irregular portion formed, on at least one of the first substrate and the second substrate, over an entire region on which the mold member is arranged, wherein the mold member is provided on the first irregular portion.

According to the liquid crystal device of the first aspect of the invention, since the mold member is provided on the first irregular portion formed on at least one of the first substrate and the second substrate, an interface distance between the mold member and the substrate is made longer by a portion along a surface configuration of the first irregular portion, as compared with a case in which the substrate is flat on the surface.

Therefore, for example, when water enters into a space between the first substrate and the second substrate from outside a liquid crystal device, it is possible to decrease the possibility of water reaching the liquid crystal layer because the interface distance between the mold member and the substrate is elongated.

Thus, the liquid crystal device exhibits improved moisture resistance.

In the above constitution, it is possible to prevent deterioration in display characteristics resulting from permeation of water into the liquid crystal layer and provide a high reliability liquid crystal device having stable display characteristics.

It is preferable that the liquid crystal device of the first aspect of the invention further include: a second irregular portion formed on at least one of the first substrate and the second substrate, wherein the sealing member be provided on the second irregular portion.

In the above-constituted liquid crystal device, an interface distance between the sealing member and the substrate can be elongated by the second irregular portion.

Therefore, for example, when water enters into a space between the first substrate and the second substrate from outside a liquid crystal device, it is possible to decrease the possibility of water reaching a liquid crystal layer through an interface between the sealing member and the substrate.

Thus, the liquid crystal device exhibits improved moisture resistance.

A second aspect of the invention provides a liquid crystal device, including: a first substrate; a second substrate opposed to the first substrate; a liquid crystal layer placed between the first substrate and the second substrate; a sealing member sealing the liquid crystal layer between the first substrate and the second substrate; and a mold member provided between the first substrate and the second substrate so as to cover an outer periphery of the sealing member, wherein a size of a space between the first substrate and the second substrate in which the mold member is provided is smaller than that of a space between the first substrate and the second substrate in which the liquid crystal layer is placed.

According to the liquid crystal device of the second aspect of the invention, a space between the first substrate and the second substrate in which the mold member is provided is narrower than that between the first substrate and the second substrate in which the liquid crystal layer is placed.

Therefore, the spatial volume between the first substrate and the second substrate is decreased resulting in a decreased quantity of the mold member being interposed in the space.

In the case in which, for example, water enters into a space between the first substrate and the second substrate from outside a liquid crystal device, it is possible to restrict water passing through a mold member at the space between the first substrate and the second substrate due to a small quantity of the mold member being interposed between the first substrate and the second substrate.

Therefore, the possibility of water mixing into the liquid crystal layer can be decreased.

Thus, the liquid crystal device exhibits improved moisture resistance.

In the above constitution, it is possible to prevent deterioration in display characteristics resulting from permeation of water into the liquid crystal layer and provide a high reliability liquid crystal device having stable display characteristics.

It is preferable that the liquid crystal device of the second aspect of the invention further include: a first supporting surface supporting the mold member on the first substrate; and a second supporting surface supporting the mold member on the second substrate, wherein the first supporting surface and the second supporting surface be tilted with respect to the substrate surfaces of the first substrate and the second substrate on which the liquid crystal layer is placed.

In the above constitution, it is possible to increase the surface areas of the first supporting surface and the second supporting surface, without changing the dimension of the first supporting surface and the second supporting surface when a liquid crystal device is viewed from a vertical direction, as compared with a case in which the first supporting surface and the second supporting surface are not tilted,

Therefore, a space between the first substrate and the second substrate extending toward the outside is larger, and the passage through which water enters from outside a liquid crystal device is longer, thereby it is possible to improve the moisture resistance of the liquid crystal device.

A third aspect of the invention provides an electro-optical device including: a first substrate; a second substrate opposed to the first substrate; an electro-optical layer placed between the first substrate and the second substrate; a mold member arranged so as to enclose the electro-optical layer between the first substrate and the second substrate; and an irregular portion formed, on at least one of the first substrate and the second substrate, over an entire region on which the mold member is arranged, wherein the mold member is provided on the irregular portion.

According to the electro-optical device of the third aspect of the invention, since the mold member is provided on the irregular portion formed on at least one of the first substrate and the second substrate, an interface distance between the mold member and the substrate is elongated by a portion along a surface configuration of the irregular portion, as compared with a case in which the first substrate and the second substrate are flat on the surface.

Therefore, since the interface distance between the mold member and the substrate is elongated, for example, when water enters into a space between the first substrate and the second substrate from outside an electro-optical device, it is possible to decrease the possibility of water entering into an electro-optical layer.

Thus, the electro-optical device exhibits improved in moisture resistance.

In the above constitution, it is possible to prevent deterioration in display characteristics resulting from permeation of water into the electro-optical layer and provide a high reliability electro-optical device having stable display characteristics.

A fourth aspect of the invention provides a projector including: a light source; a light modulation section modulating light from the light source; and a projection section projecting light modulated by the light modulation section, wherein the light modulation section is a liquid crystal device including: a first substrate; a second substrate opposed to the first substrate; a liquid crystal layer placed between the first substrate and the second substrate; a sealing member sealing the liquid crystal layer between the first substrate and the second substrate; a mold member provided between the first substrate and the second substrate so as to cover an outer periphery of the sealing member, and an irregular portion formed, on at least one of the first substrate and the second substrate, over an entire region on which the mold member is arranged, wherein the mold member is provided on the irregular portion.

According to the projector of the fourth aspect of the invention, a liquid crystal device in which a mold member is placed on an irregular portion to prevent a deterioration in display characteristics resulting from permeation of water into a liquid crystal layer is provided as a light modulation section, thereby it is possible to provide a projector having high reliability display characteristics.

A fifth aspect of the invention provides a micro-device including: a first substrate; a second substrate opposed to the first substrate; a device section placed between the first substrate and the second substrate; a mold member provided so as to enclose the device section between the first substrate and the second substrate; and an irregular portion formed, on at least one of the first substrate and the second substrate, over an entire region on which the mold member is arranged, wherein the mold member is provided on the irregular portion.

According to the micro-device of the fifth aspect of the invention, since the mold member is provided on an irregular portion formed on at least one of the first substrate and the second substrate, an interface distance between the mold member and the substrate is elongated by a portion along a surface configuration of the irregular portion compared with a case in which the first substrate and the second substrate are flat on the surface.

Therefore, for example, when water enters into a space between the first substrate and the second substrate from outside the micro-device, it is possible to decrease the possibility of water reaching a device section because the interface distance between the mold member and the substrate is elongated.

Thus, the micro-device is improved in moisture resistance to realize improved reliability.

### BRIEF DESCRIPTION OF THE DRAWINGS

FIG. 1A is a plan view that shows a liquid crystal device of a first embodiment, and FIG. 1B is a cross-sectional view that shows the liquid crystal device of the first embodiment taken along the line A-A in FIG. 1A.

FIG. 2 is an equivalent circuit diagram of the liquid crystal device of the first embodiment.

FIG. 3 is a plan view for explaining a structure of the liquid crystal device of the first embodiment.

FIG. 4 is a cross-sectional view that shows the liquid crystal device taken along the line C-C shown in FIG. 3.

FIG. 5 is a cross-sectional view of an opposed substrate on which an inorganic alignment layer has been formed.

FIG. 6 is an enlarged cross-sectional view for explaining a mold structure.

FIG. 7A is a plan view that shows a first modification of the liquid crystal device of the first embodiment, and FIG. 7B is a cross-sectional view that shows a first modification of the liquid crystal device of the first embodiment.

FIG. 8A is a cross-sectional view that shows a second modification of the liquid crystal device of the first embodiment, and FIG. 8B is a cross-sectional view that shows a third modification of the liquid crystal device of the first embodiment.

FIG. 9 is a cross-sectional view that shows a liquid crystal device of a second embodiment.

FIG. 10 is a cross-sectional view that shows a modification of the liquid crystal device of the second embodiment.

FIG. 11 is a cross-sectional view that shows an embodiment of an electrophoresis device.

FIG. 12 is a cross-sectional view that shows an embodiment of an organic EL device.

FIG. 13 is a schematic diagram of one embodiment of a projector.

FIG. 14 is a perspective view that shows one embodiment of a micro-device,

FIG. 15 is a schematic cross-sectional view that shows a structure of a light modulator shown in FIG. 14.

### DESCRIPTION OF EXEMPLARY EMBODIMENTS

First embodiment

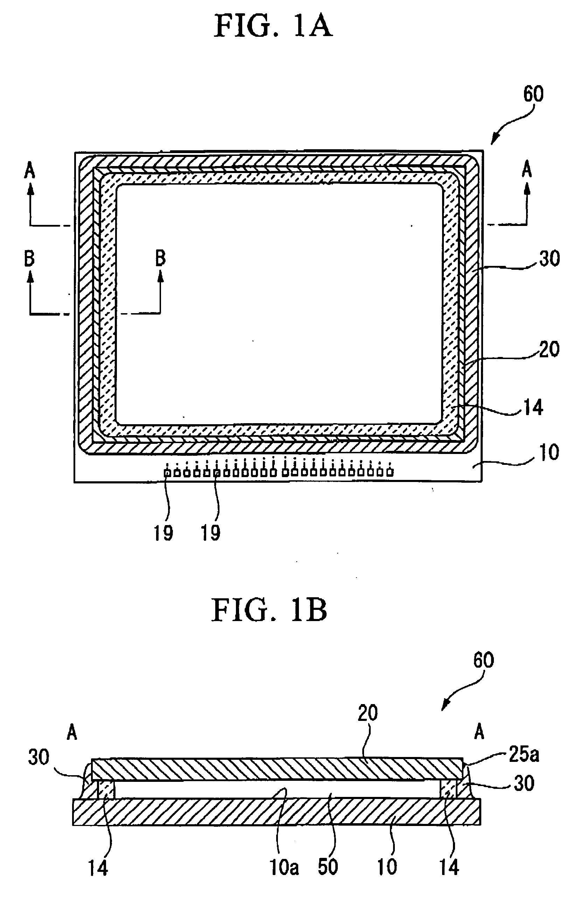

First, an explanation will be given of a liquid crystal device of a first embodiment in this invention by referring to FIGS. 1A to 7B.

In this embodiment, an explanation will be made by referring to an active-matrix transmissive liquid crystal device in which a thin film transistor (hereinafter, abbreviated as TFT) element is used as a switching element.

Liquid crystal device

FIG. 1A is a schematic plan view that shows an active-matrix liquid crystal device of one embodiment of this invention, and FIG. 1B is a schematic cross-sectional view taken along the line A-A in FIG. 1A. Reference numeral 60 in FIGS. 1A and 1B denotes a liquid crystal device.

As shown in FIGS. 1A and 1B, the liquid crystal device 60 includes a TFT array substrate 10 (first substrate), an opposed substrate 20 (second substrate) arranged in opposition to the TFT array substrate 10, a liquid crystal layer 50 held between the TFT array substrate 10 and the opposed substrate 20, and a sealing member 14 sealing the liquid crystal layer 50 between the TFT array substrate 10 and the opposed substrate 20.

In this instance, the liquid crystal layer 50 is provided along inner peripheral portions of the TFT array substrate 10 and the opposed substrate 20, and sealed by the sealing member 14, which is substantially in a picture-frame configuration when the liquid crystal device 60 is viewed from a vertical direction.

The opposed substrate 20 is slightly smaller than the TFT array substrate 10.

A substrate, which is substantially similar in contour to the sealing member 14 provided on the TFT array substrate 10, is used as the opposed substrate 20.

The TFT array substrate 10 and the opposed substrate 20 are fastened by the sealing member 14.

A light-shielding film acting as a picture-frame is provided on the side further inside from the sealing member 14 along the inside of the sealing member 14.

A region enclosed by the light-shielding film is a display region at which images of the liquid crystal device 60 are produced.

As shown in FIG. 1A, a plurality of connection terminals 19 is formed at the TFT array substrate 10.

A metal wiring connected to the connection terminal 19 is connected to a pixel electrode formed at the display region.

A driving circuit for controlling the driving of a pixel electrode may be provided at a region outside the sealing member 14 on the opposed substrate 20. In this instance, the driving circuit is electrically connected to the pixel electrode, and the connection terminal 19 is connected to the driving circuit.

Furthermore, a mold member 30 covering the sealing member 14 is formed at an outer periphery of the sealing member 14.

The mold member 30 is made of materials such as acrylic resin and epoxy resin.

The mold member 30 is provided to adhere the TFT array substrate 10 to the opposed substrate 20.

The mold member 30 contributes to an improved mechanical strength of the liquid crystal device 60.

In a cross-sectional view shown in FIG. 1B, the mold member 30 is formed so as to cover an upper surface 10a of the TFT array substrate 10, an outer peripheral surface of the sealing member 14, and a part of a side end surface 25a of the opposed substrate 20 from the outside.

Thereby, the mold member 30 is provided between the TFT array substrate 10 and the opposed substrate 20.

The respective inorganic alignment layers are formed on the inner surfaces (opposed surfaces) of the TFT array substrate 10 and the opposed substrate 20.

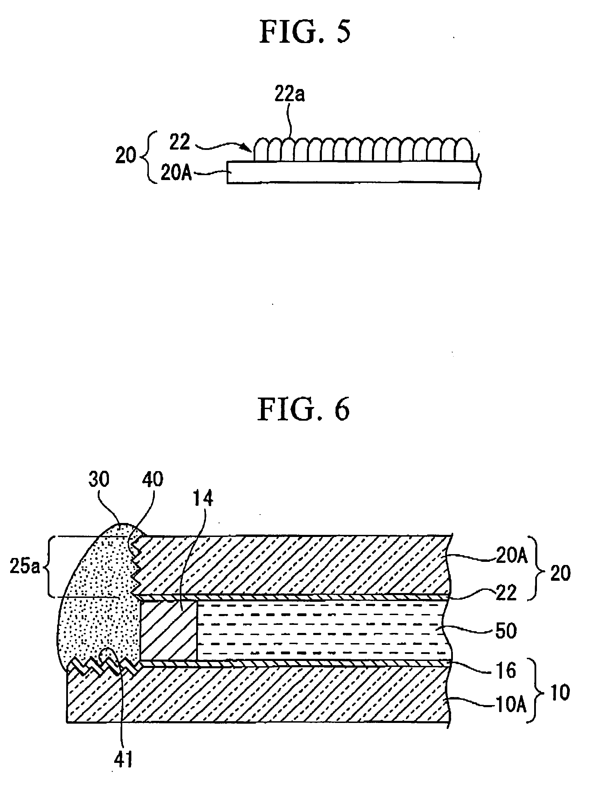

As shown in FIG. 6, a substantially serrated irregular portion 40 is formed on the side end surface 25a of the opposed substrate 20.

Furthermore, a substantially serrated irregular portion 41 is formed partially on the TFT array substrate 10 in opposition to the opposed substrate 20.

The mold member 30 is provided on the irregular portions 40 and 41, by which an interface distance between the mold member 30 and the TFT array substrate 10, and an interface distance between the mold member 30 and the opposed substrate 20 are made longer.

Equivalent circuit

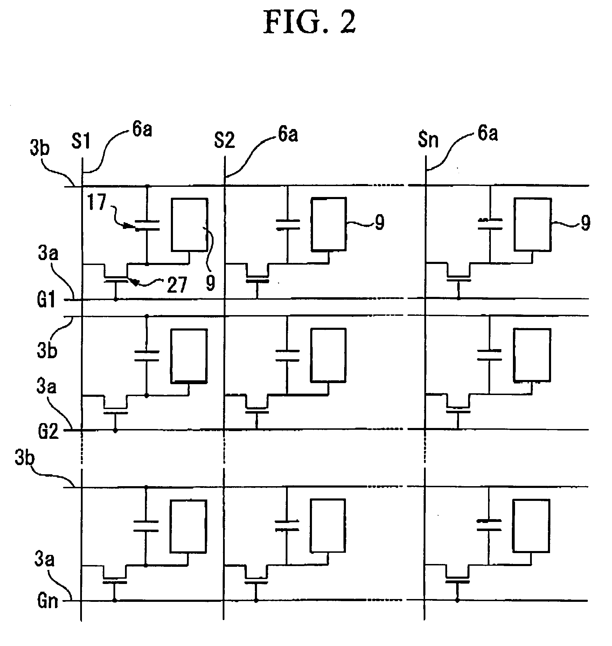

FIG. 2 is an equivalent circuit diagram of the liquid crystal device.

In order to constitute a display region of the transmissive liquid crystal device 60, a pixel electrode 9 is formed on each of pixel elements arranged in a matrix form (arrayed arrangement).

A TFT element 27 is formed on the side of the pixel electrode 9 as a switching element for controlling the supply of electricity to the pixel electrode 9.

A data line 6a is connected to a source of the TFT element 27.

Image signals S1, S2, ... Sn are sent to each data line 6a from a data-line driving element.

A scanning line 3a is connected to a gate of the TFT element 27.

Scanning signals G1, G2, ... Gm are sent to the scanning line 3a in a pulsed manner at a predetermined timing from a scanning-line driving element.

In contrast, the pixel electrode 9 is connected to a drain of the TFT element 27.

In the above-constituted TFT element 27, when the scanning signals G1, G2, ... Gm sent from the scanning line 3a are used to keep the TFT element 27 ON only for a predetermined time, image signals S1, S2, ... Sn sent from the data line 6a are written into a liquid crystal of each pixel element via the pixel electrode 9 at a predetermined timing.

The image signals S1, S2, ... Sn written into the liquid crystal at a predetermined timing are kept for a certain time by a liquid crystal capacitance formed between the pixel electrode 9 and a common electrode (described later).

A storage capacitance 17 is formed between the pixel electrode 9 and a capacitance line 3b in order to prevent leakage of the image signals S1, S2,... Sn held by the liquid crystal capacitance.

The storage capacitance 17 is arranged parallel with the liquid crystal capacitance.

As described above, when a voltage signal is applied to the liquid crystal, an alignment condition of liquid crystal molecules is changed depending on a voltage level applied.

Thereby, light from a light source that has entered into the liquid crystal is modulated to produce image light.

Structure of liquid crystal device in plan view

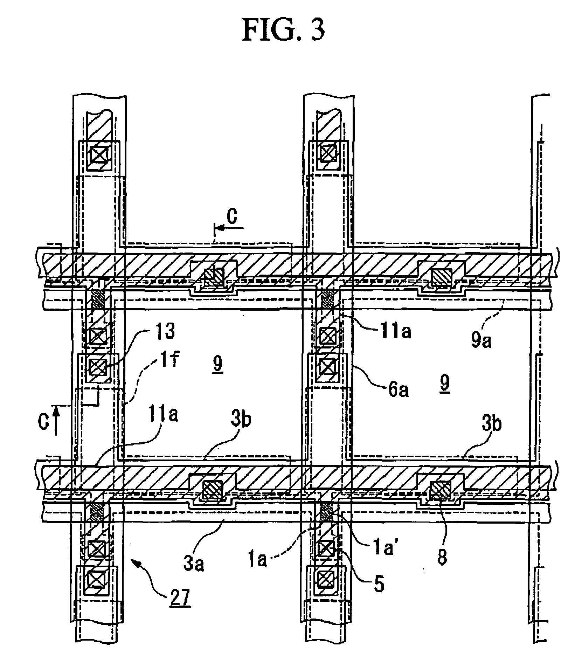

FIG. 3 is a plan view for explaining a structure of the liquid crystal device.

In the liquid crystal device of this embodiment, the rectangular pixel electrode 9 made of transparent electric-conductive materials such as indium tin oxide (hereinafter referred to as ITO) is arranged on the TFT array substrate 10 in a matrix form (arrayed arrangement).

A dotted line 9a in FIG. 3 represents the contour of the pixel electrode 9.

The data line 6a, the scanning line 3a, and the capacitance line 3b are provided along longitudinal and lateral borders of the pixel electrode 9.

In the liquid crystal device 60 of this embodiment, a rectangular region at which each pixel electrode 9 is formed is the pixel element. It is possible to display for each of the pixel elements arranged in a matrix form.

The TFT element 27 is formed mainly with a semiconductor layer 1 a of a poly-silicon film or the like.

The data line 6a is connected via a contact hole 5 to a source region (described later) of the semiconductor layer 1a.

Furthermore, the pixel electrode 9 is connected via a contact hole 8 to a drain region (described later) of the semiconductor layer 1a.

In contrast, a channel region 1a' is formed at a portion opposed to the scanning line 3a in the semiconductor layer 1a.

Structure of liquid crystal device in cross-sectional view

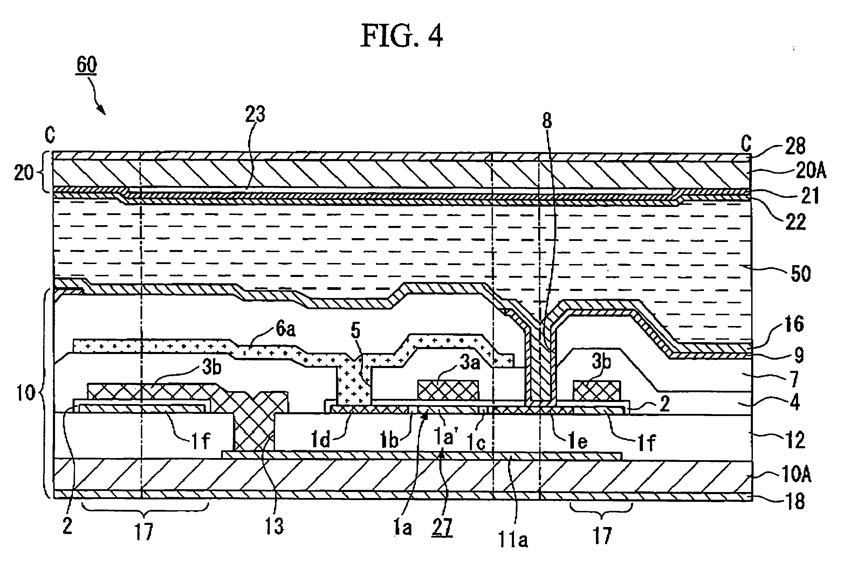

FIG. 4 is a cross-sectional view for explaining a structure of the liquid crystal device 60, corresponding to a cross-sectional view taken along the line C-C shown in kIG. 3.

As shown in FIG. 4, the liquid crystal device 60 of this embodiment is mainly constituted with the TFT array substrate 10, the opposed substrate 20 arranged in opposition to the TFT array substrate 10, and the liquid crystal layer 50 held between the TFT array substrate 10 and the opposed substrate 20.

In this instance, the TFT anay substrate 10 is mainly constituted with a substrate body 10A made of translucent materials such as glass and crystal, the TFT element 27 formed inside the substrate body 10A, the pixel electrode 9, and an inorganic alignment layer 16.

In contrast, the opposed substrate 20 is mainly constituted with a substrate body 20A made of translucent materials such as glass and crystal, a common electrode 21 formed inside the substrate body 20A, and an inorganic alignment layer 22.

A first light-shielding film 11a and a first interlayer insulating film 12 (described later) are formed on the surface of the TFT array substrate 10.

The semiconductor layer 1a is formed on the surface of the first interlayer insulating film 12, thereby providing the TFT element 27 mainly made of the semiconductor layer 1a.

The channel region 1a' is formed at a portion opposed to the scanning line 3a in the semiconductor layer 1a, and a source region and a drain region are formed on both sides of the channel region 1a'.

A lightly-doped drain (LDD) structure is adopted in the TFT element 27.

A high-concentration region relatively high in impurity concentrations and a low-concentration region (LDD region) relatively low in impurity concentrations are formed respectively at the source region and the drain region.

Thus, a low-concentration source region 1b and a high-concentration source region 1d are formed at the source region, while a low-concentration drain region 1c and a high-concentration drain region 1 e are formed at the drain region.

A gate insulating film 2 is formed on the surface of the semiconductor layer 1a.

A scanning line 3a is formed on the surface of the gate insulating film 2, and a gate electrode is constituted at a portion opposed to the channel region 1a'.

Furthermore, a second interlayer insulating film 4 is formed on the surface of the gate insulating film 2 and of the scanning line 3a.

In addition, the data line 6a is formed on the surface of the second interlayer insulating film 4.

The data line 6a is connected to the high-concentration source region 1d via the contact hole 5 formed at the second interlayer insulating film 4.

Furthermore, a third interlayer insulating film 7 is formed on the surface of the second interlayer insulating film 4 and of the data line 6a.

The pixel electrode 9 is formed on the surface of the third interlayer insulating film 7, and the pixel electrode 9 is connected to the high-concentration drain region le via the contact hole 8 formed on the second interlayer insulating film 4 and the third interlayer insulating film 7.

Furthermore, the inorganic alignment layer 16 is formed so as to cover the pixel electrode 9.

The inorganic alignment layer 16 regulates the alignment of liquid crystal molecules on application of a non-selective voltage.

In this embodiment, the semiconductor layer 1a is elongated to form a first storage capacitance electrode 1f.

In addition, the gate insulating film 2 is elongated to form a dielectric film.

The capacitance line 3b is arranged on the surface of the dielectric film, thereby providing a second storage capacitance electrode.

The storage capacitance 17 is constituted with the first storage capacitance electrode 1f, the dielectric film, and the second storage capacitance electrode.

Furthermore, a first light-shielding film 11a is formed on the surface of the substrate body 10A corresponding to a formation region of the TFT element 27.

The first light-shielding film 11a is to prevent light that has entered into a liquid crystal device from being irradiated on the channel region 1a' of the semiconductor layer 1a, the low-concentration source region 1b and the low-concentration drain region 1c.

In contrast, a second light-shielding film 23 is formed on the surface of the substrate body 20A in the opposed substrate 20.

The second light-shielding film 23 is to prevent light that has entered into a liquid crystal device from being irradiated on the channel region 1a' of the semiconductor layer 1a, the low-concentration source region 1b and the low-concentration drain region 1c.

The second light-shielding film 23 is provided at a region superimposed on the semiconductor layer 1a, when the liquid crystal device 60 is viewed from a vertical direction.

The common electrode 21 made of a conductive material such as ITO is formed substantially all over on the surface of the opposed substrate 20.

Furthermore, the inorganic alignment layer 22 is formed on the surface of the common electrode 21.

The inorganic alignment layer 22 is to regulate the alignment of liquid crystal molecules on application of a non-selective voltage.

The liquid crystal layer 50 made of nematic liquid crystal or the like is held between the TFT array substrate 10 and the opposed substrate 20.

Nematic liquid crystal molecules are provided with a positive dielectric-constant anisotropy, horizontally aligned along a substrate on application of a non-selective voltage and vertically aligned along the electric field on application of a selective voltage.

Nematic liquid crystal molecules are provided with a positive refractive-index anisotropy, and a product (retardation or Δnd) of the birefringence with a thickness of the liquid crystal layer is approximately 0.40 µm (at 60°C), for example.

An alignment direction restricted by the inorganic alignment layer 16 of the TFT array substrate 10 and that by the inorganic alignment layer 22 of the opposed substrate 20 are set to be twisted at approximately 90°.

Thereby, the liquid crystal device 60 of this embodiment is driven by a twisted nematic mode.

Furthermore, polarizers 18 and 28 made of materials in which iodine is doped to polyvinyl alcohol (PVA) are arranged outside the TFT array substrate 10 and the opposed substrate 20.

It is preferable that each of the polarizers 18 and 28 be loaded on a supporting substrate made of a material high in heat conductivity such as sapphire glass or crystal and arranged apart from the liquid crystal device 60.

Each of the polarizers 18 and 28 is provided with functions to absorb linear polarization light in the direction of absorption axis and transmit linear polarization light in the direction of transmission axis.

The polarizer 18 on the TFT array substrate 10 is arranged in such a way that the transmission axis can substantially coincide with the alignment-restricted direction of the inorganic alignment layer 16.

The polarizer 28 on the opposed substrate 20 is arranged in such a way that the transmission axis can substantially coincide with the alignment restricted direction of the inorganic alignment layer 22.

The liquid crystal device 60 is arranged so that the opposed substrate 20 is directed toward a light source.

Only linear polarization light coinciding with the transmission axis of the polarizer 28 among light from the light source passes through the polarizer 28 and is entered into the liquid crystal device 60.

In the liquid crystal device 60 in which a non-selective voltage is applied, liquid crystal molecules aligned horizontally with respect to a substrate are arranged so as to be laminated in a spiral form twisted at approximately 90° in the thickness of the liquid crystal layer 50.

Therefore, linear polarization light entered into the liquid crystal device 60 is subjected to an approximate 90° optical rotation and emitted from the liquid crystal device 60.

The linear polarization light coincides with the transmission axis of the polarizer 18 and therefore passes through the polarizer 18.

Therefore, in the liquid crystal device 60 in which a non-selective voltage is applied, white display is conducted (normally white mode).

In contrast, in the liquid crystal device 60 in which a selective voltage is applied, liquid crystal molecules are vertically aligned toward a substrate.

Therefore, linear polarization light entered into the liquid crystal device 60 is not subjected to optical rotation but emitted from the liquid crystal device 60.

The linear polarization light crosses with the transmission axis of the polarizer 18 at a right angle and therefore will not pass through the polarizer 18.

Therefore, in the liquid crystal device 60 in which a selective voltage is applied, black display is conducted.

Inorganic alignment layer

As described above, the inorganic alignment layers 16 and 22 are formed inside the TFT array substrate 10 and the opposed substrate 20.

Hereinafter, an explanation will be made by referring to the inorganic alignment layer 22 formed on the opposed substrate 20. In this instance, the inorganic alignment layer 16 formed on the TFT array substrate 10 is also given a similar constitution.

The inorganic alignment layers 16 and 22 are formed to have a thickness from 0.02 to 0.3 µm (preferably from 0.02 to 0.08 µm) by using silicon oxides such as SiO₂ and SiO or metal oxides such as Al₂O₃, ZnO, MgO and ITO.

The inorganic alignment layers 16 and 22 can be produced, for example, by a sputtering method such as ion beam sputtering and magnetron sputtering, by evaporation, by a sol-gel method, by a self-organization method, or the like.

In the case in which the inorganic alignment layers 16 and 22 are formed using, for example, an ion beam sputtering apparatus, sputtered particles which are materials for forming the inorganic alignment layers are radiated from a target by an ion beam radiated from an ion source, the sputtered particles are deposited on a substrate, and the inorganic alignment layer can be formed on the substrate.

FIG. 5 is a cross-sectional view that shows the opposed substrate 20 on which the inorganic alignment layer 22 has been formed.

As described above, when the ion beam sputtering apparatus is used, sputtered particles are continuously entered at a substantially constant incidence angle to the substrate body 20A constituting the opposed substrate 20.

Then, the sputtered particles are deposited in a diagonal columnar shape to form an inorganic columnar structure 22a on the substrate body 20A.

A countless number of these columnar structures 22a are formed on the surface of the substrate body 20A, thereby constituting the inorganic alignment layer 22.

An angle of the substrate body 20A with respect to a target in the ion beam sputtering apparatus can be adjusted in such a way that sputtered particles are entered into the substrate body 20A at a predetermined incidence angle to impart a predetermined angle of inclination to the columnar structure 22a, as shown in FIG. 5.

Then, in the liquid crystal device 60, since liquid crystal molecules are aligned along the columnar structure 22a, the inorganic alignment layer 22 can be used to regulate the alignment of the liquid crystal molecules toward a predetermined direction on application of a non-selective voltage. Pre-tilt can also be imparted to liquid crystal molecules.

The inorganic alignment layer 16 formed on the TFT array substrate 10 is similar in constitution to the inorganic alignment layer 22, produced by a method similar to the above described method and provided with the same function.

The inorganic alignment layer may be formed by another method, for example, a plurality of tilted planes are formed in advance on the surface of a primer film of the inorganic alignment layer, and the above sputtering method is used to form the inorganic alignment layer on the surface of the tilted planes, thereby giving a configuration of these tilted planes to the surface of the inorganic alignment layer.

Furthermore, ion milling may be conducted to allow an ion beam entering at a predetermined angle after the above sputtering method is employed to form the inorganic alignment layer, thereby forming a reentrant portion having a predetermined direction on the surface of the inorganic alignment layer.

Furthermore, ion milling is performed in advance on the surface of the primer film of the inorganic alignment layer, the above sputtering method is then employed to form the inorganic alignment layer, and the ion milling may be again applied to the surface, thereby providing a reentrant portion on the surface of the inorganic alignment layer.

By using any of the above methods, the inorganic alignment layer reliably imparting a pre-tilt angle to liquid crystal molecules can be formed.

As described above, the liquid crystal layer 50 is sealed between the TFT array substrate 10 and the opposed substrate 20.

The sealing member 14 which seals the liquid crystal layer 50 and also attaches adhesively a space between the TFT array substrate 10 and the opposed substrate 20, is provided as shown in FIG. 1.

The sealing member 14 includes, for example, a gap member.

The gap member provides a predetermined thickness of the liquid crystal layer (cell gap) in the liquid crystal device 60.

Furthermore, the mold member 30 made of acrylic resin, epoxy resin, or the like, is placed so as to cover an outer periphery of the sealing member 14.

In the liquid crystal device 60 of this embodiment, such a mold structure is adopted, that includes the sealing member 14 of the liquid crystal device 60, and the mold member 30 provided between the TFT array substrate 10 and the opposed substrate 20 so as to cover an outer periphery of the sealing member 14.

A detailed explanation will be given of this mold structure by referring to FIG. 6.

FIG. 6 is a cross-sectional view of the liquid crystal device 60 taken along the line B-B in FIG. 1, and is an enlarged view of the mold structure portion in particular.

Mold structure

As shown in FIG. 6, the mold member 30 is provided at the side end surface 25a of the opposed substrate 20, on an outer peripheral surface of the sealing member 14, and partially on an upper surface of the TFT array substrate 10.

The mold member 30 is placed along an outer periphery, of the sealing member 14 for sealing the liquid crystal layer 50.

In this instance, irregular portions 40 and 41 (first irregular portions) are formed respectively on the TFT array substrate 10 and the opposed substrate 20 on which the mold member 30 is placed.

The irregular portions 40 and 41 are continuously formed over an entire periphery of the mold region.

The irregular portions 40 and 41 are formed substantially in a serrated form as shown in FIG. 6.

Thus, as shown in FIG. 6, the irregular portion 40 is formed on the side end surface 25a, which is a mold region of the substrate body 20A of the opposed substrate 20.

The irregular portion 41 is formed on the mold region in the TFT array substrate 10.

The irregular portions 40 and 41 respectively formed on the TFT array substrate 10 and the opposed substrate 20 inherently have an interface distance between the mold member 30 and the TFT array substrate 10 by a portion along a surface configuration of the irregular portion 41, and have an interface distance between the mold member 30 and the opposed substrate 20 by a portion along a surface configuration of the irregular portion 40, which are longer than those in a conventional structure in which no irregular portion is provided and the substrate is flat on the surface.

Next, an explanation will be given of a method for forming the irregular portions 40 and 41.

First, for example, a resist layer is formed on the surface of a substrate.

Then, a gray mask is used to perform photo lithography, thereby providing a predetermined groove shape on the resist layer.

Thereafter, the resist layer on which the groove shape is provided is used as a mask to etch a substrate. Thereby, it is possible to provide an irregular portion having a substantially serrated in a cross-sectional view.

The irregular portion is not necessarily produced by a method in which photo lithography is used but may be produced by a method in which a transfer mold is pressed to the substrate bodies 10A and 20A to provide an irregular configuration.

Furthermore, the inorganic alignment layers 16 and 22 are respectively provided on a surface on which the TFT array substrate 10 and the opposed substrate 20 are opposed to each other.

Therefore, the inorganic alignment layer 16 is placed in a substantially constant thickness at the irregular portion 41 formed on the surface of the substrate body 10A of the TFT array substrate 10 according to the surface.

Thereby, a reentrant portion is formed at a depth of several micrometers corresponding to a surface configuration of the irregular portion 41 on the surface of the inorganic alignment layer 16.

Thus, the liquid crystal device 60 is provided with the mold member 30 at the irregular portion 41 of the TFT array substrate 10 and at the irregular portion 40 of the opposed substrate 20. The TFT array substrate 10 and the opposed substrate 20 are supported by the mold member 30.

Incidentally, when water, impurities, or the like, enter into a liquid crystal layer 50 held between the TFT array substrate 10 and the opposed substrate 20, there is concern that various functions of the liquid crystal device 60 are affected.

In particularly, when water which is a polarized molecule enters into a liquid crystal having a polarization structure, the liquid crystal may be deteriorated in alignment, thereby resulting in a possible deterioration in display characteristics of the liquid crystal device 60.

Therefore, for the purpose of obtaining a high reliability liquid crystal device 60 stable in display characteristics, it is desirable to provide a high moisture resistance against water entering from outside the liquid crystal device 60.

In the mold structure of this embodiment, as described above, the irregular portions 40 and 41 are formed at mold regions of the TFT array substrate 10 and the opposed substrate 20, and the mold member 30 is placed on the irregular portions 40 and 41.

According to the above constitution, since the mold member 30 is provided at the irregular portions 40 and 41 formed on the TFT array substrate 10 and the opposed substrate 20, an interface distance between the mold member 30 and the TFT array substrate 10 is elongated by an area in contact with a surface configuration of the irregular portions 40 and 41 and an interface distance with the opposed substrate 20 is also elongated, as compared with a case in which no irregular portion is provided and the substrate is flat on the surface.

Therefore, even if water enters into a space between the TFT array substrate 10 and the opposed substrate 20 from outside the liquid crystal device 60, it is possible to decrease the possibility of water reaching the liquid crystal layer 50 due to the fact that an interface distance between the mold member 30 and the TFT array substrate 10 is made longer and an interface distance between the mold member 30 and the opposed substrate 20 is also made longer.

In this instance, in the liquid crystal device 60 of this embodiment, the inorganic alignment layer 16 is formed on the surface of the TFT array substrate 10 at which the mold member 30 is provided.

The inorganic alignment layer 16 is made of porous substances constituted with a columnar structure, as shown in FIG. 5.

Therefore, there is concern that an interval may develop in particular between the mold member 30 and the opposed substrate 20.

There is also concern that a great interval may develop at an interface between the mold member 30 and the inorganic alignment layer 16.

Therefore, there is concern that water, impurities, or the like, may enter into the liquid crystal layer 50 from outside the liquid crystal device 60 through these intervals, thereby causing the defects described above.

However, according to the above described mold structure of this embodiment, since an irregular configuration is formed on the inorganic alignment layer 16 provided on the TFT array substrate 10, an interface distance between the inorganic alignment layer 16 and the mold member 30 is made longer, thereby desirably preventing the permeation of water from outside.

Therefore, according to the liquid crystal device 60 of this embodiment, it is possible to prevent a deterioration in display characteristics resulting from the permeation of water into the liquid crystal layer 50 and provide a high reliability liquid crystal device 60 having stable display characteristics.

The greater the heights of the irregular portions 40 and 41 formed on the surface of the TFT array substrate 10 and of the opposed substrate 20 are, the longer the interface distance between the mold member 30 and the inorganic alignment layers 16 and 22 is.

Furthermore, as described later, the liquid crystal device 60 is used as a light modulation section, thereby it is possible to provide a high reliability liquid crystal projector.

In the above described first embodiment, an irregular portion is formed both on the TFT array substrate 10 and the opposed substrate 20, an irregular portion is provided at one of the TFT array substrate 10 or the opposed substrate 20, thereby it is possible to elongate an interface distance between the mold member 30 and the substrate, thereby imparting an improved moisture resistance to the liquid crystal device 60.

Furthermore, the irregular portions 40 and 41 provided on the TFT array substrate 10 and the opposed substrate 20 are not limited in configuration to the above described embodiment.

For example, in this embodiment, the irregular portion 41 formed on the TFT array substrate 10 is an irregular portion provided in a reentrant form on the surface of the substrate body 10A (flat surface), but may be an irregular portion provided in a salient form on the flat surface of the substrate body 10A.

Furthermore, the irregular portion 41 may be an irregular portion projected or grooved on an inorganic alignment layer 16, with the substrate body 10A kept as the flat surface.

In addition, a projection or a groove may be formed both on the substrate body 10A and the inorganic alignment layer 16, which are then combined, thereby providing an irregular portion.

In addition, in the liquid crystal device 60 of this embodiment, the inorganic alignment layers 16 and 22 are formed all over on individual opposed surfaces at which the TFT array substrate 10 and the opposed substrate 20 are opposed to each other. The inorganic alignment layers 16 and 22 may be provided only at a region holding the liquid crystal layer 50.

In this case, since no inorganic alignment layers 16 and 22 are formed at a mold region, it is possible to prevent the development of an interval between the inorganic alignment layer and the mold member 30.

Specifically, in the case in which an alignment layer made of an organic material is used or in the case in which no inorganic alignment layer is formed selectively only on a substrate which is to be used as a mold region, such a possibility is decreased that an interval may develop at an interface between the mold member 30 and the TFT array substrate 10 or an interface between the mold member 30 and the opposed substrate 20.

Thereby, it is possible to prevent the development of an interval through which water enter into the liquid crystal device 60 from outside.

In the above described constitution, an irregular portion may be additionally formed on the surface of a mold region to coat the mold member 30 at the irregular portion, thereby elongating an interface distance between the mold member 30 and the TFT array substrate 10 or an interface distance between the mold member 30 and the opposed substrate 20.

Thereby, it is possible to minimize a possibility that water or the like may enter into the liquid crystal layer 50 through an interval at the interface between the mold member 30 and the TFT array substrate 10 or an interval at the interface between the mold member 30 and the opposed substrate 20, and also improve the reliability of the liquid crystal device 60.

First modification of the first embodiment

Next, an explanation will be given of a first modification of a liquid crystal device of the first embodiment.

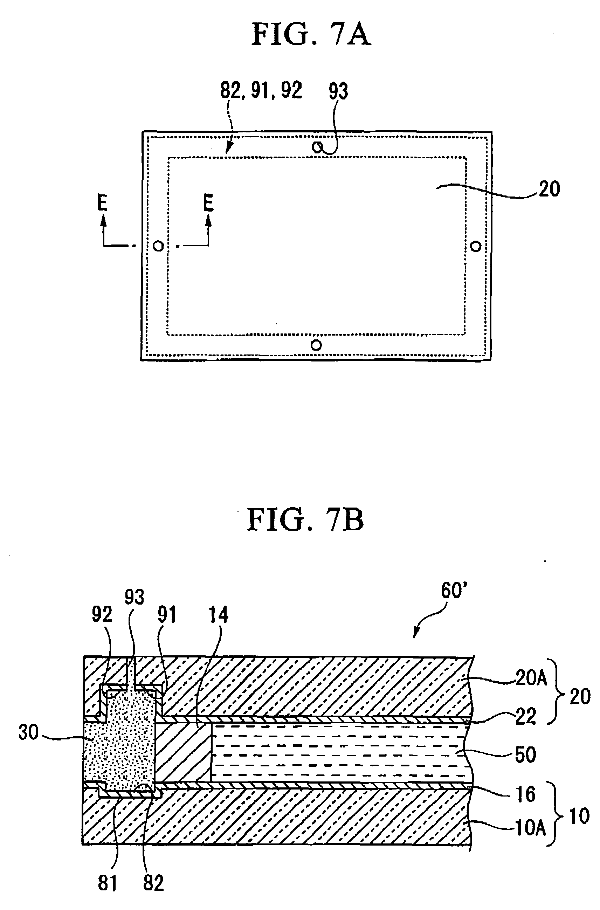

FIGS. 7A and 7B are views for explaining the first modification of the first embodiment.

FIG. 7A is a plan view that shows a liquid crystal device 60' of the first modification, and FIG. 7B is a cross-sectional view taken along the line E-E in FIG. 7A.

As shown in FIGS. 7A and 7B, in the liquid crystal device 60', a groove 91 is formed on the surface of the substrate body 20A of the opposed substrate 20, and the groove 91 constitutes a part of a mold region at which the mold member 30 is placed.

In this instance, in the liquid crystal device 60', unlike the liquid crystal device 60 shown in FIG. 6, the TFT array substrate 10 and the opposed substrate 20, which are opposed to each other, are similar in dimension when the liquid crystal device 60' is viewed from a vertical direction.

As shown in FIG. 7A, the groove 91 is formed continuously at an entire periphery of the mold region.

The groove 91 is rectangular in cross-sectional view, as shown in FIG. 7B.

The inorganic alignment layer 22 is placed at a substantially constant thickness along the surface of the groove 91.

Thereby, a reentrant portion 92 (first irregular portion) is formed at a thickness of several micrometers on the surface of the inorganic alignment layer 22.

As shown in FIG. 7A, the reentrant portion 92 is formed continuously at an entire periphery of the mold region.

The reentrant portion 92 is rectangular in cross-sectional view, as shown in FIG. 7B.

Furthermore, a plurality of through-holes 93 is provided, on the substrate body 20A.

In the substrate body 20A, no inorganic alignment layer 22 is provided at a portion on which the through-holes 93 are provided.

The through-holes 93 are communicatively connected to the mold region.

Furthermore, in the liquid crystal device 60', a groove 81 is formed on the surface of the substrate body 10A of the TFT array substrate 10, and the groove 81 constitutes a part of the mold region at which the mold member 30 is placed.

The groove 81 is similar in structure to the above described groove 91, and the inorganic alignment layer 16 is placed at a substantially constant thickness along the surface of the groove 81.

Thereby, a reentrant portion 82 (first irregular portion) is formed continuously at an entire periphery of the mold region on the surface of the inorganic alignment layer 16.

The reentrant portion 82 is rectangular in cross-sectional view, as shown in FIG. 7B.

The TFT array substrate 10 is attached adhesively to the opposed substrate 20 in a state such that the reentrant portion 82 of the TFT array substrate 10 coincides with the reentrant portion 92 of the opposed substrate 20, thereby a mold region is formed by the reentrant portions 82 and 92.

Furthermore, the sealing member 14 is provided inside the mold region, as the first embodiment.

The liquid crystal layer 50 is sealed by the sealing member 14 between the TFT array substrate 10 and the opposed substrate 20.

As a method for arranging the mold member 30 at the mold region, for example, a method in which mold materials are injected from the through-holes 93 can be adopted.

In this instance, bubbles contained inside the mold member 30 such as air are released outside from the through-holes 93.

Thereby, the mold member 30 can be desirably placed at a space between the TFT array substrate 10 and the opposed substrate 20.

Furthermore, as described above, since a great amount of mold members 30 are placed at a mold region constituted with the reentrant portion 82 provided on the TFT array substrate 10 and the reentrant portion 92 provided on the opposed substrate 20, the TFT array substrate 10 can be adhesively attached to the opposed substrate 20 so that they can be supported more reliably. Thus, it is possible to increase the mechanical strength of the liquid crystal device 60',

Incidentally, since the inorganic alignment layers 16 and 22 are porous substances constituted with columnar structures shown in FIG. 5, there is concern that a great interval may develop in particularly at an interface between the mold member 30 and the inorganic alignment layer 16 or at an interface between the mold member 30 and the inorganic alignment layer 22, as described above.

Thereby, there is concern that water and impurities may enter into a liquid crystal layer through the interval from outside a liquid crystal device 60', thereby deteriorating the display characteristics of the liquid crystal device 60.

In contrast, in the liquid crystal device 60' of the first modification shown in FIGS, 7A and 7B, a constitution is adopted such that the reentrant portion 82 is formed on the surface of the inorganic alignment layer 16, the reentrant portion 92 is formed on the surface of the inorganic alignment layer 22, and the mold member 30 is placed on the surface of the reentrant portions 82 and 92.

According to the above constitution, since an interface distance between the mold member 30 and the inorganic alignment layer 16 and an interface distance between the mold member 30 and the inorganic alignment layer 22 can be elongated as compared with a case in which no irregular portion is formed, it is possible to decrease the possibility of water and others entering into a liquid crystal layer 50 due to a longer permeation passage of water and others.

Therefore, it is possible to provide a high reliability liquid crystal device 60 having stable display characteristics.

Second modification of the first embodiment

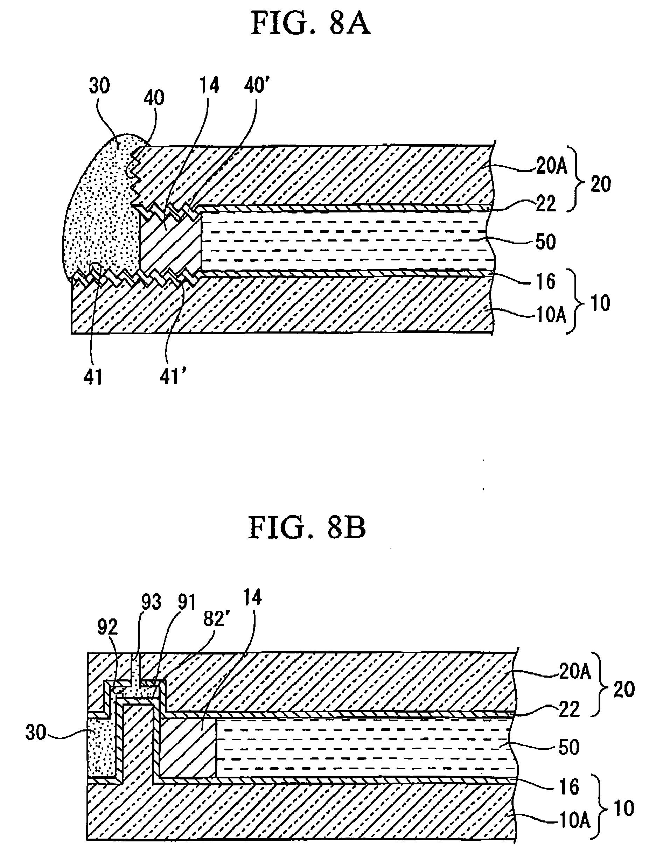

Next, an explanation will be given of a second modification of the liquid crystal device in the first embodiment by referring to FIG. 8A.

In the second modification, as shown in FIG. 8A, irregular portions 40' and 41' (second irregular portions) are formed at a position on which the sealing member 14 is placed.

Thus, the irregular portions 40' and 41' are formed at a position on which the sealing member 14 is placed between the TFT array substrate 10 and the opposed substrate 20.

According to the above constitution, it is possible to elongate an interface distance between the sealing member 14 and the TFT array substrate 10, and an interface distance between the sealing member 14 and the opposed substrate 20 at a region on which the irregular portions 40' and 41' are formed, as compared with a case in which a substrate holding the sealing member 14 is flat on the surface.

Therefore, in the case in which, for example, water enters into a space between the TFT array substrate 10 and the opposed substrate 20 from outside a liquid crystal device, it is possible to decrease a possibility that water may reach into the liquid crystal layer 50 through an interface between the sealing member 14 and the TFT array substrate 10 or an interface between the sealing member 14 and the opposed substrate 20, and improve further the moisture resistance of the liquid crystal device.

Third modification of the first embodiment

Next, an explanation will be given of a third modification of the liquid crystal device in the first embodiment by referring to FIG. 8B.

In the third modification, as shown in FIG. 8B, a salient portion 82' is provided on the TFT array substrate 10 as an irregular portion in place of the reentrant portion 82 shown in FIG. 7.

In the above constitution, it is preferable that the width of the reentrant portion 92 formed on the opposed substrate 20 be greater than that of the salient portion 82'.

In this instance, as shown in FIG. 8B, the salient portion 82' of the TFT array substrate 10 is fitted into the reentrant portion 92 of the opposed substrate 20 via the mold member 30.

As described above, for example, a side surface of the salient portion 82' is allowed to make contact with that of the reentrant portion 92 in a state such that the salient portion 82' is fitted into the reentrant portion 92, thereby it is possible to reliably align the TFT array substrate 10 with the opposed substrate 20 in a horizontal arrangement.

In this instance, the reentrant portion 92 and the salient portion 82' are formed, thereby it is possible to elongate an interface distance between the mold member 30 and the TFT array substrate 10, and an interface distance between the mold member 30 and the opposed substrate 20.

Therefore, it is possible to effectively improve the moisture resistance of the liquid crystal device, as the first embodiment, the first modification, and the second modification described above.

A fitting structure made of the salient portion 82' and the reentrant portion 92 may be provided, for example, between the TFT array substrate 10 and the opposed substrate 20 at which the sealing member 14 is placed.

Second embodiment

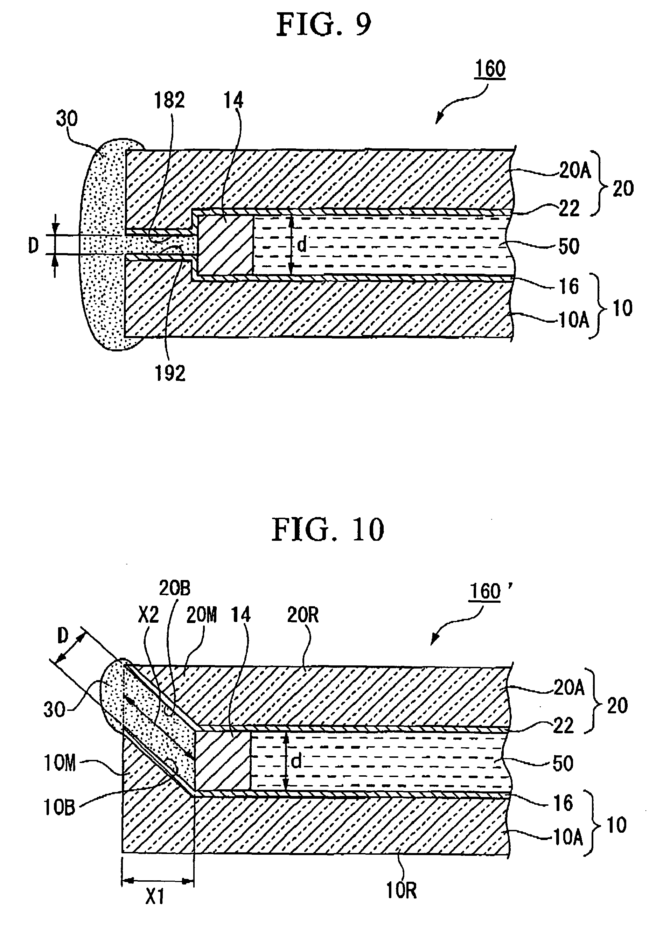

Next, an explanation will be given of a second embodiment of the liquid crystal device in this invention by referring to FIG. 9.

FIG. 9 is a cross-sectional view that shows a liquid crystal device 160 in the second embodiment

In liquid crystal devices described in this embodiment, the same symbols are given to those of similar structure to the first embodiment for explanation, and a simplified explanation is made for a constitution similar to the first embodiment

Furthermore, in this embodiment, the TFT array substrate 10 and the opposed substrate 20 arranged so as to be mutually opposed are almost the same in dimension, when the liquid crystal device 160 is viewed from a vertical direction.

In the first embodiment, an irregular portion is formed at a mold region in the TFT array substrate 10 and the opposed substrate 20, thereby elongating an interface distance between the mold member 30 and the TFT array substrate 10, and an interface distance between the mold member 30 and the opposed substrate 20, thereby improving the moisture resistance of the liquid crystal device 60.

In contrast, in the liquid crystal device 160 of this embodiment, a structure is adopted such that an interval between the TFT array substrate 10 and the opposed substrate 20 on which the mold member 30 is arranged is made narrower than an interval between the TFT array substrate 10 and the opposed substrate 20 which hold the liquid crystal layer 50 (hereinafter, referred to as thickness of liquid crystal layer (cell gap)).

The liquid crystal device 160 of this embodiment, includes the TFT array substrate 10 and the opposed substrate 20 which are arranged so as to be opposed to each other, the liquid crystal layer 50 sealed by the sealing member 14 between the TFT array substrate 10 and the opposed substrate 20, and the mold member 30 provided between the TFT array substrate 10 and the opposed substrate 20 so as to cover an outer periphery of the sealing member 14.

As shown in FIG. 9, in the liquid crystal device 160, a salient portion 192 is formed on the surface of the inorganic alignment layer 16 of the TFT array substrate 10, and a salient portion 182 is formed on the surface of the inorganic alignment layer 22 of the opposed substrate 20.

The salient portions 192 and 182 are continuously formed over an entire periphery of the mold region, and the mold member 30 is placed on the salient portions 192 and 182.

The sealing member 14 is formed inside the salient portion 192 of the TFT army substrate 10 and the salient portion 182 of the opposed substrate 20, as the liquid crystal device 60, thereby sealing the liquid crystal layer 50.

A spacer (not shown) is interposed in the sealing member 14 to secure a desired thickness of liquid crystal layer d (cell gap).

Furthermore, the size D of the space between the TFT array substrate 10 and the opposed substrate 20 at a mold region, is made smaller than the thickness of the liquid crystal layer d, due to formation of the salient portions 192 and 182.

Thereby, a volume constituting the space which has the size D is decreased to result in a decreased quantity of the mold member 30 interposed in the space which has the size D, as compared with a case in which a space between the TFT array substrate 10 and the opposed substrate 20 in which the mold member 30 is placed is equal to the thickness of liquid crystal layer d (d = D).

In this instance, in the case in which water enters into a space between the TFT array substrate 10 and the opposed substrate 20 from outside the liquid crystal device 160, since a smaller volume of the mold member 30 interposed in the space which has the size D, water content in itself which passes through the mold member 30 is decreased.

Therefore, it is possible to decrease a possibility that water may mix into the liquid crystal layer 50 and improve the moisture resistance of the liquid crystal device 160.

According to the above constitution, it is possible to prevent a deterioration in display characteristics of a liquid crystal device resulting from water permeation into the liquid crystal layer 50 and provide a high reliability liquid crystal device 160 having stable display characteristics.

Modification of the second embodiment

Next, an explanation will be given of a modification of the liquid crystal device 160 in the second embodiment by referring to FIG. 10.

As shown in FIG. 10, in a liquid crystal device 160' as a modification of the liquid crystal device 160, each of the substrate surfaces constituting the space which has the size D is tilted with respect to a substrate surface on which the liquid crystal layer 50 is arranged.

In this instance, the substrate surface on which the liquid crystal layer 50 is arranged means the inner surfaces of the TFT array substrate 10 and the opposed substrate 20 which hold the sealing member 14 and the liquid crystal layer 50 shown in FIG. 10 in this modification.

The substrate surfaces on which the space is formed mean a first supporting surface 10B of the TFT array substrate 10 on which the mold member 30 is arranged, and a second supporting surface 20B of the opposed substrate 20 on which the mold member 30 is arranged.

Then, a mold region is constituted with the first supporting surface 10B and the second supporting surface 20B.

Furthermore, the first supporting surface 10B and the second supporting surface 20B are tilted with respect to the substrate surface of the TFT array substrate 10 and the substrate surface of the opposed substrate 20 on which the liquid crystal layer 50 is held therebetween and placed.

In other words, as shown in FIG. 10, the substrate body 10A of the TFT array substrate 10 is constituted in combination of a liquid-crystal supporting portion 10R which constitutes a substrate surface holding the liquid crystal layer 50 and the sealing member 14 with a mold supporting portion 10M having a substrate surface (first supporting surface 10B) which is tilted with respect to the substrate surface in the liquid-crystal supporting portion 10R and on which the mold member 30 is placed.

Furthermore, the substrate body 20A of the opposed substrate 20 is constituted in combination of the liquid-crystal supporting portion 20R with a mold supporting portion 20M having a substrate surface (second supporting surface 20B) which is tilted with respect to the substrate surface in the liquid-crystal supporting portion 20R and on which the mold member 30 is placed,

Therefore, the mold supporting portions 10M and 20M and the liquid-crystal supporting portions 10R and 20R are arranged so as to be opposed to each other.

According to the above constitution, each of the first supporting surface 10B and the second supporting surface 20B constituting the space which has the size D is tilted with respect to a substrate surface on which the liquid crystal layer 50 is arranged.

In this instance, a width between the TFT array substrate 10 and the opposed substrate 20 constituting the liquid-crystal supporting portions 10R and 20R is set to be equal to the thickness of liquid crystal layer d (cell gap), which is a thickness of the liquid crystal layer 50.

Furthermore, the size D of the space between the first supporting surface 10B and the second supporting surface 20B is, as shown in FIG. 10, set to be thinner than the thickness of the liquid crystal layer d.

Then, the mold member 30 bonding the TFT array substrate 10 to the opposed substrate 20 is provided on the first supporting surface 10B and the second supporting surface 20B.

In the liquid crystal device 160' of this modification, the size D of the space between the TFT array substrate 10 and the opposed substrate 20 (the first supporting surface 10B and the second supporting surface 20B) on which the mold member 30 is arranged is made narrower than the thickness of liquid crystal layer d, thereby it is possible to decrease a quantity of the mold member 30 interposed in the space which has the size D, as the above liquid crystal device 160 of the second embodiment.

Therefore, in the case in which water enters into a space between the TFT array substrate 10 and the opposed substrate 20 from outside, since a smaller quantity of the mold member 30 interposed in the space which has the size D, it is possible to restrict a quantity of water passing into the mold member 30.

Furthermore, an apparent interface distance when a mold region is viewed from the vertical direction of the liquid crystal device 160' is expressed by a distance X1 given in FIG. 10.

In this modification, as described above, since the first supporting surface 10B of the mold supporting portion 10M and the second supporting surface 20B of the mold supporting portion 20M on which the mold member 30 is placed are tilted with respect to the substrate surfaces of the liquid-crystal supporting portions 10R and 20R, an interface distance between the mold member 30 and the TFT array substrate 10 and an interface distance between the mold member 30 and the opposed substrate 20 can be expressed by X2.

Therefore, an interface distance constituting the space in a mold region can be made longer than the apparent interface distance X1.

As described above, since an interface distance of a mold region at which the mold member 30 is formed is made longer, it is possible to elongate a passage through which water enters from outside the liquid crystal device 160' and improve the moisture resistance of the liquid crystal device 160'.

According to the above constitution, it is possible to decrease the possibility of water mixing into a liquid crystal layer 50 and improve the moisture resistance of the liquid crystal device 160'.

Therefore, it is possible to prevent a deterioration in display characteristics resulting from permeation of water into the liquid crystal layer 50 and provide a high reliability liquid crystal device 160'.

An explanation has been so far made of an embodiment of the liquid crystal device. This invention may be applicable to electro-optical devices such as an organic EL device and an electrophoresis device, in addition to liquid crystal devices.

First, an explanation will be given of an embodiment in which this invention is applied to an electrophoresis device 100.

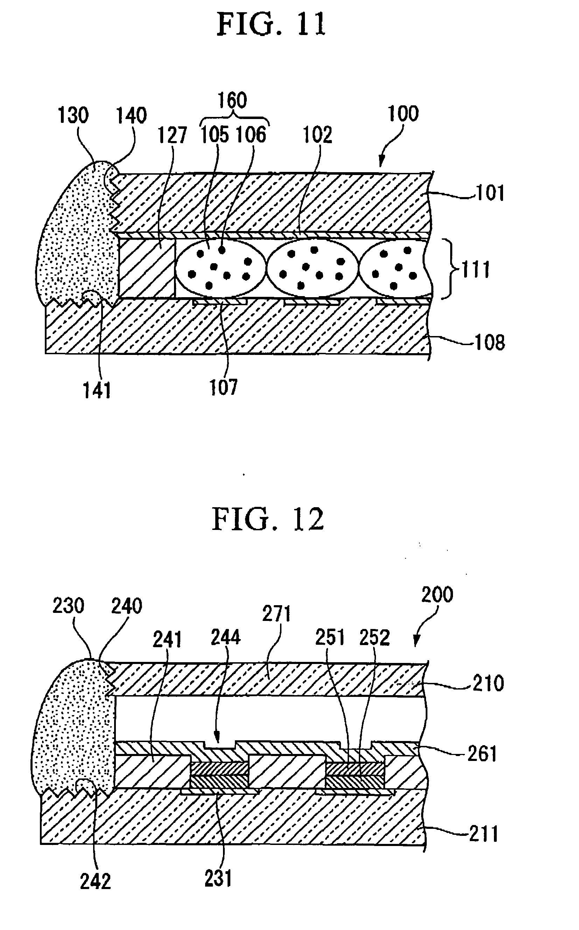

As shown in FIG. 11, the electrophoresis device 100 of this embodiment is provided with an electrophoresis layer (electro-optical layer) 111 between a first substrate 101 and a second substrate 108 which are arranged in opposition.

The first substrate 101 and the second substrate 108 are adhered together with a sealing member 127 and supported in a state that they are kept apart at a certain distance by a spacer (not shown).

The sealing member 127 is formed in a picture-frame shape so as to enclose a periphery of the display region.

A mold member 130 is arranged outside the sealing member 127 so as to enclose the electrophoresis layer 111.

As the embodiment of the liquid crystal device explained in FIG. 6, the electrophoresis device 100 of this embodiment is provided with an irregular portion 140 having a substantially serrated cross-section at the side end surface of the first substrate 101, and an irregular portion 141 having a substantially serrated cross-section also at a part of the second substrate 108.

Then, the mold member 130 is provided on the irregular portions 140 and 141.

Thus, the irregular portions 140 and 141 are formed over an entire region on which the mold member 130 is arranged.

The first substrate 101 is made of a substrate having translucency such as transparent glass or film.

A common electrode 102 made of a transparent conductive material such as indium tin oxide (ITO) is provided on an inner surface (on the side of the electrophoresis layer 11) of the first substrate 101.

An outer surface of the first substrate 101 is a display surface of the electrophoresis device 100.

In contrast, the second substrate 108 is not necessarily transparent, and a substrate or the like may be used in which an insulating layer is formed on the surface of a metal plate such as a stainless steel plate, in addition to a glass substrate and a plastic film substrate, for example.

A pixel region is formed as a partition in a matrix form (arrayed arrangement) on the second substrate 108, thereby providing a pixel electrode 107 corresponding to each pixel region.

Although not shown, a TFT element (switching element) for controlling the supply of electricity is provided at the pixel electrode 107.

Then, in the electrophoresis device 100 of this embodiment, a microcapsule 161 in which an electrophoresis dispersion 105 and electrophoresis particles 106 are covered with a capsule-like resin film as the electrophoresis layer 111 is arranged at a closed space constituted with the first substrate 101, the second substrate 108, and the sealing member 127.

A structure of the electrophoresis layer 111 is not limited to the above microcapsule, and such a structure may be used in which an electrophoresis dispersion having a dispersion medium, electrophoresis particles or the like are sealed into a space between the first substrate 101 and the second substrate 108, thereby constituting an electrophoresis layer.

A voltage is applied to a space between the electrodes 102 and 107, by which the electrophoresis particles 106 inside the microcapsule 161 migrate swiftly to a common electrode 2 by Coulomb force and attach on the surface of an electrode, thereby providing an image display.

According to the above constitution, since the mold member 130 is provided at the irregular portions 140 and 141 formed on the first substrate 101 and the second substrate 108, an interface distance between the mold member 130 and the first substrate 101 and an interface distance between the mold member 130 and the second substrate 108 are elongated by an area in contact with a surface configuration of the irregular portions 140 and 141, as compared with a case in which no irregular portion is provided and the substrate is flat on the surface.

Therefore, in the case in which water enters into a space between the first substrate 101 and the second substrate 108 from outside the electrophoresis device 100, since an interface distance between the mold member 130 and the first substrate 101 is made longer and an interface distance between the mold member 130 and the second substrate 108 is also made longer, it is possible to decrease the possibility of water reaching the electrophoresis layer 111.

An embodiment shown in FIGS. 7A to 10, which is appropriate for the liquid crystal device, may be adopted in the electrophoresis device of this invention.

Next, an explanation will be given of an embodiment applied to an organic EL device 200 of this invention by referring to FIG. 12.

As shown in FIG. 12, a circuit section (not shown) including a driving TFT for driving a pixel electrode 231 is formed on a substrate 211 (first substrate) in the organic EL device 200 of this embodiment.

A light-emitting element (organic EL element) 244 is provided as an electro-optical layer at each of a plurality of regions partitioned by a bank 241 on the circuit section.

The light-emitting element 244 is constituted sequentially with the pixel electrode 231 functioning as an anode, a positive-hole transporting layer 252 for filling/transporting positive holes from the pixel electrode 231, a light-emitting layer 251 including an organic EL substance which is an electro-optical substance, and a cathode 261.

In the above-constituted light-emitting element 244, positive holes filled from the positive-hole transporting layer 252 are combined with electrons of the cathode 261, thereby allowing the light-emitting layer 251 to emit light.

A sealing substrate (second substrate) 210 is provided so as to cover the substrate 211.

In the case in which the organic EL device 200 is used as a bottom emission type, since light is emitted from the substrate 211, a substrate which is transparent or semi-transparent is adopted as the substrate 211.

Furthermore, In the case in which the organic EL device 200 is used as a top emission type, light is emitted from the sealing substrate 210, a substrate which is transparent or semi-transparent is adopted as the sealing substrate 210.

Then, a mold member 230 is arranged so as to enclose the organic EL element.

The mold member 230 prevents water from entering into the organic EL device 200, thereby protecting the light-emitting element 244 (an organic EL element) vulnerable to water.

In the organic EL device 200 of this embodiment, an irregular portion 240 having a substantially serrated cross-section is formed on the side end surface of the sealing substrate 210, and an irregular portion 242 having a serrated cross-section is formed partially on the substrate 211, as the embodiment of the liquid crystal device shown in FIG. 6.

The mold member 230 is provided on the irregular portions 240 and 242.

Thus, the irregular portions 240 and 242 are formed over an entire region on which the mold member 230 is arranged.

According to the above constitution, since the mold member 230 is provided with respect to the irregular portion 242 formed on the substrate 211 and the irregular portion 240 formed on the sealing substrate 210, an interface distance between the mold member 230 and the substrate 211 is elongated and an interface distance between the mold member 230 and the sealing substrate 210 is also elongated by an area in contact with a surface configuration of the irregular portions 240 and 242, as compared with a case in which no irregular portion is provided and the substrate is flat on the surface.

Therefore, in the case in which water enters into a space between the sealing substrate 210 and the substrate 211 from outside the organic EL device 200, since an interface distance between the mold member 230 and the sealing substrate 210 is made longer and an interface distance between the mold member 230 and the substrate 211 is also made longer, it is possible to decrease the possibility of water reaching the organic EL element including the light-emitting layer 251.

Furthermore, an embodiment shown in FIGS. 7A to 10, which is appropriate for the liquid crystal device, may be adopted in the organic EL device 200 of this invention.

Projector

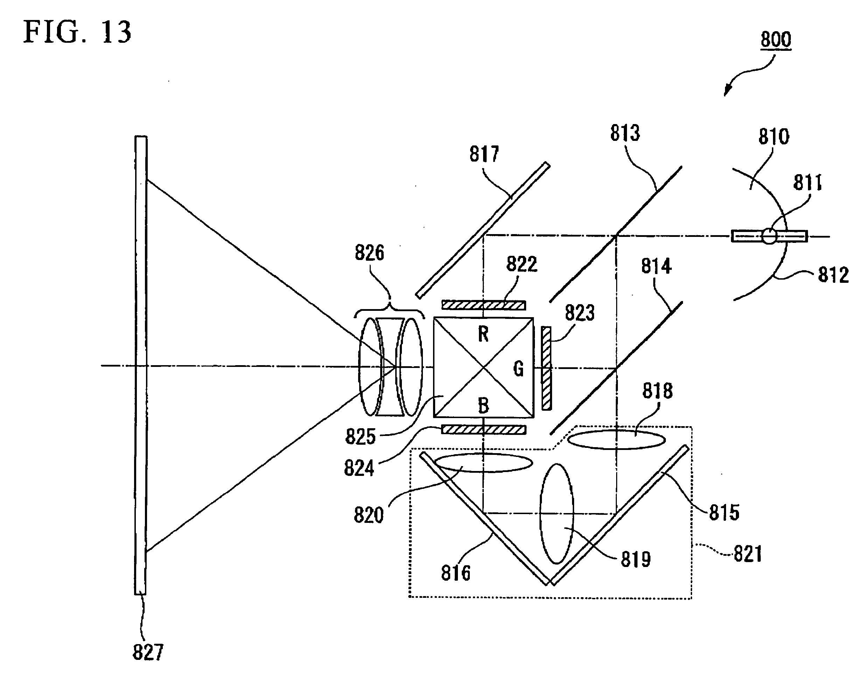

Next, an explanation will be given of a projector of this invention by referring to FIG. 13.

FIG. 13 is a schematic diagram of main parts of a projector 800.

The projector 800 includes a liquid crystal device described in the above described embodiments as a light modulation section.

In FIG. 13, reference numeral 810 denotes a light source, reference numerals 813 and 814 denote dichroic mirror, reference numerals 815, 816 and 817 denote a reflection mirror, reference numeral 818 denotes an input lens, reference numeral 819 denotes a relay lens, reference numeral 820 denotes an output lens, reference numerals 822, 823 and 824 denote a light modulation section of the liquid crystal device in this invention, reference numeral 825 denotes a cross-dichroic prism, and reference numeral 826 denotes a projection lens (projection section).

The light source 810 includes a lamp 811 such as a metal halide lamp and a reflector 812 for reflecting light from the lamp 811.

The dichroic mirror 813 is to transmit red light contained in white light emitted from the light source 810 and reflect blue light and green light.

The red light transmitted through the dichroic mirror 813 is reflected by the reflection mirror 817 and entered into the light modulation section 822 for red light.

The green light reflected by the dichroic mirror 813 is reflected by the dichroic mirror 814 and entered into the light modulation section 823 for green light.

The blue light reflected by the dichroic mirror 813 is transmitted from the dichroic mirror 814.

The optical path of blue light is longer than that of red or green light.

Therefore, in order to avoid loss of blue light, the projector 800 includes a light-guiding section 821 constituted with a relay-lens system including the input lens 818, the relay lens 819, and the output lens 820.

The blue light is entered into a light modulation section 824 for blue light via the light-guiding section 821.

Three color lights modulated by each of the light modulation section 822, 823, and 824 are entered into the cross-dichroic prism 825.

The cross-dichroic prism 825 is prepared by adhering four right-angle prisms together, and a dielectric multilayer film for reflecting red light and a dielectric multilayer film for reflecting blue light are formed in an X-letter shape at the interface of the prism.

Three types of colored light are synthesized by the dielectric multilayer films to form light which provides a color image.

The synthesized light is projected on a screen 827 by the projection lens 826, which is a projection optical system, and an enlarged image is displayed.

The above described projector 800 is provided as a light modulation section with any one of the liquid crystal devices 64, 60', 160, and 160' described in the each of individual embodiments and modifications.

As described above, in the liquid crystal devices of each of embodiments and modifications, it is possible to decrease the possibility of water reaching the liquid crystal layer from outside a liquid crystal device. Therefore, the liquid crystal devices have a high moisture resistance, stable display characteristics, and a high reliability.

Since the projector 800 of this invention is provided with the above liquid crystal device as a light modulation section, it is possible to have the function of controlling alignment of liquid crystal molecules in the liquid crystal device and realize a high reliability and excellent display characteristics,

The technical scope of this invention shall not be limited to the above embodiments. As a matter of course, the invention may include various modifications of the embodiments in a scope not deviating from the object of this invention.

In the above embodiment, an explanation was made of an example of the liquid crystal device including the TFT as a switching element. As a matter of course, this invention may be applicable to a liquid crystal device including a two-terminal element such as a thin film diode as a switching element.

Furthermore, in the above embodiment, an explanation was made of an example of the transmissive liquid crystal device. As a matter of course, this invention may be applicable to a reflective liquid crystal device.

In addition, in the above embodiment, an explanation was made of an example of the liquid crystal device driving by a twisted nematic (TN) mode. As a matter of course, this invention may be applicable to a liquid crystal device driving on a vertical alignment (VA) mode.

In addition, in the above embodiment, an explanation was made of an example of the three-plate type projector (projection display device). As a matter of course, this invention may be applicable to a single-plate type projection display device or a direct-view display device.

The liquid crystal device of this invention may also be applicable to electronic apparatus other than a projector. A specific example includes a cellular phone.

The cellular phone is provided at a display portion with a liquid crystal device described in the above embodiments or the modifications.

Furthermore, other examples of electronic apparatus include an IC card, a video camera, a personal computer, a head-mounted display, a facsimile machine including a display function, a digital camera finder, a portable TV, DSP apparatus, a PDA, an electronic organizer, an electronic bulletin board, and a display for advertisements.

Next, an explanation will be given of an example which is applied to a digital micro mirror device (DMD) as one embodiment of the micro-device.

The DMD may be used, for example, as a reflection-type light modulator in the above described projector.

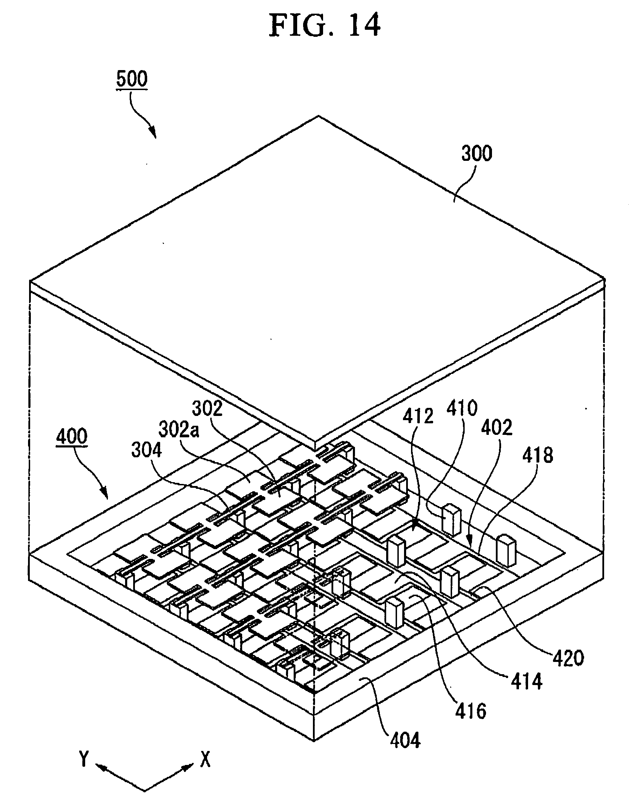

FIG. 14 is a perspective view that shows assembled major constitutions of a light modulator 500.

In FIG. 14, the light modulator 500 is mainly constituted with a mirror substrate 400 (first substrate) and a cover glass substrate 300 (second substrate).

A plurality of micro mirrors 302 (device section) are provided between the mirror substrate 400 and the cover glass substrate 300.

Concretely, a reentrant portion 402 is formed on the mirror substrate 400, and a plurality of micro mirrors 302 (device section) arranged in a matrix form (arrayed arrangement) are provided on the reentrant portion 402.

In these micro mirrors 302, the micro mirrors 302 arranged in one direction, for example, along the X direction shown in FIG. 14 are connected by using a torsion bar 304.

A reflection layer 302a is formed on the surface of the micro mirrors 302.

Then, the micro mirrors 302 are driven so as to be tilted, by which the reflection direction of light entered into the micro mirrors 302 is changed.

Then, time for reflecting light toward a predetermined reflection direction is controlled to modulate light

Subsequently, inside the reentrant portion 402, a plurality of support portions 410 formed so as to project from the reentrant portion 402 are provided at a position opposed to the torsion bar 304 between the two micro mirrors 302 adjacent to each other in the X direction.

The torsion bar 304 and the support portion 410 are subjected to anode bonding, thereby arranging the micro mirrors 302 inside the reentrant portion 402.

Furthermore, a wiring pattern portion 412 is formed on the reentrant portion 402.

The wiring pattern portion 412 is provided with a first address electrode 414 and a second address electrode 416 respectively at positions opposed to the back surfaces of the micro mirrors 302 on both sides between which a torsion bar 104 is held.

A plurality of the first address electrodes 414 arranged along the Y direction are individually connected to a first common wiring 418.

Similarly, a plurality of the second address electrodes 416 arranged along the Y direction is individually connected to a second common wiring 420.

When micro mirrors 302 are subjected to ON tilt driving, electricity is supplied simultaneously via the torsion bar 304 to a plurality of the micro mirrors 302 arranged along the X direction given in FIG. 14.

Furthermore, at the same time with the supply of electricity to the micro mirrors 302, the first address electrodes 414 and the second address electrodes 416 are driven point-sequentially or line-sequentially.

Electricity is supplied by sequentially selecting the torsion bar 304 toward the Y direction given in FIG. 14, thereby it is possible to conduct the ON tilt driving of the micro mirrors 302 arranged in a matrix form at a predetermined cycle.

In contrast, when the micro mirrors 302 are subjected to OFF tilt driving, the polarity of voltage applied to the first address electrode 414 and the second address electrode 416 may be made reverse to that of a case of the ON tilt driving.

Thereby, the micro mirrors 302 are tilted and driven in a direction reverse to the ON tilt driving.

As described above, the micro mirrors 302 are changed in tilt, thereby driving a light modulator.

A mold member is arranged on a frame-shaped upper surface 404 of the mirror substrate 400 so as to enclose a region (reentrant portion 402 given in FIG. 14) at which the micro mirrors 302 are provided.

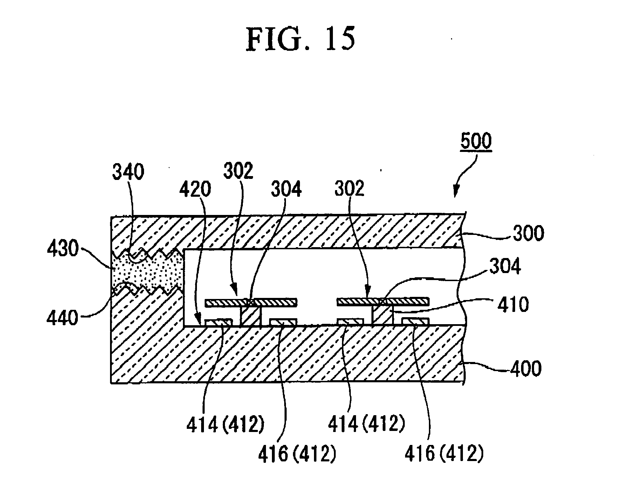

As shown in FIG. 15, the mirror substrate 400 is bonded to the cover glass substrate 300 via a mold member.

FIG. 15 is a schematic view that shows a light modulator 500.

As shown in FIG. 15, the mirror substrate 400 is adhered to the cover glass substrate 300 via a mold member 430.

The mold member 430 is to prevent water from entering into the light modulator 500, and protecting the micro mirrors 302, a wiring pattern portion 412, and others.

In the light modulator 500 of this embodiment, as the liquid crystal device of the embodiment explained in FIG. 6, an irregular portion 340 having a substantially serrated cross-section is formed on the lower surface of the cover glass substrate 300, and an irregular portion 440 having a substantially serrated cross-section is also formed on the upper surface 404 of the mirror substrate 400 arranged in opposition to the irregular portion 304.

Then, the mold member 430 is provided on the irregular portions 340 and 440.

Thus, the irregular portions 340 and 440 are formed over an entire region (reentrant portion 402) on which the mold member 430 is arranged.

In the above described light modulator 500, since the mold member 430 is arranged on the irregular portions 340 and 440, an interface distance between the mold member 430 and the cover glass substrate 300 and an interface distance between the mold member 430 and the mirror substrate 400 can be made longer by an area in contact with a surface configuration of the irregular portions 340 and 440, as compared with a case in which no irregular portion is provided and the substrate is flat on the surface.

Therefore, in the case in which water enters into inside the light modulator 500 from outside, since an interface distance between the mold member 430 and the cover glass substrate 300 and an interface distance between the mold member 430 and the mirror substrate 400 are made longer, it is possible to decrease the possibility of water reaching the micro mirror 302 and the wiring pattern portion 412.

An embodiment shown in FIGS. 7A to 10, which is appropriate for the liquid crystal device, may be adopted in the light modulator 500 of this invention.

## Claims

1. A liquid crystal device comprising:
a first substrate (10);
a second substrate (20) opposed to the first substrate (10);
a liquid crystal layer (50) placed between the first substrate (10) and the second substrate (20);
a sealing member (14) sealing the liquid crystal layer (50) between the first substrate (10) and the second substrate (20);
a mold member (30) provided between the first substrate (10) and the second substrate (20) so as to cover an outer periphery of the sealing member (14); and
a first irregular portion (40, 41) formed, on at least one of the first substrate (10) and the second substrate (20), over an entire region on which the mold member (30) is arranged,
wherein the mold member (30) is provided on the first irregular portion (40, 41).

2. The liquid crystal device according to claim 1, further comprising:
a second irregular portion (40', 41') formed on at least one of the first substrate (10) and the second substrate (20), wherein
the sealing member (14) is provided on the second irregular portion (40', 41').

3. A liquid crystal device comprising:
a first substrate (10);
a second substrate (20) opposed to the first substrate (10);
a liquid crystal layer (50) placed between the first substrate (10) and the second substrate (20);
a sealing member (14) sealing the liquid crystal layer (50) between the first substrate (10) and the second substrate (20); and
a mold member (30) provided between the first substrate (10) and the second substrate (20) so as to cover an outer periphery of the sealing member (14),
wherein a size of a space between the first substrate (10) and the second substrate (20) in which the mold member (30) is provided is smaller than that of a space between the first substrate (10) and the second substrate (20) in which the liquid crystal layer (50) is placed.

4. The liquid crystal device as set forth in claim 3, further comprising:
a first supporting surface (10B) supporting the mold member (30) on the first substrate (10); and
a second supporting surface (20B) supporting the mold member (30) on the second substrate (20),
wherein the first supporting surface (10B) and the second supporting surface (20B) are tilted with respect to the substrate surfaces of the first substrate (10) and the second substrate (20) on which the liquid crystal layer (50) is placed.

5. An electro-optical device comprising:
a first substrate (101, 211);
a second substrate (108, 210) opposed to the first substrate (101, 211);
an electro-optical layer (111, 244) placed between the first substrate (101, 211) and the second substrate (108, 210);
a mold member (130, 230) arranged so as to enclose the electro-optical layer (111, 244) between the first substrate (101, 211) and the second substrate (108, 210); and
an irregular portion (140, 141, 240, 242) formed, on at least one of the first substrate (101, 211) and the second substrate (108, 210), over an entire region on which the mold member (130, 230) is arranged,
wherein the mold member (130, 230) is provided on the irregular portion (140, 141,240,242).

6. A projector comprising:
a light source (810);
a light modulation section (822, 823, 824) modulating light from the light source (810); and
a projection section (826) projecting light modulated by the light modulation section (822, 823, 824),
wherein the light modulation section (822, 823, 824) is a liquid crystal device including:
a first substrate (10);
a second substrate (20) opposed to the first substrate (10);
a liquid crystal layer (50) placed between the first substrate (10) and the second substrate (20);
a sealing member (14) sealing the liquid crystal layer (50) between the first substrate (10) and the second substrate (20);
a mold member (30) provided between the first substrate (10) and the second substrate (20) so as to cover an outer periphery of the sealing member (14); and
an irregular portion (40, 41) formed, on at least one of the first substrate (10) and the second substrate (20), over an entire region on which the mold member (30) is arranged,
wherein the mold member (30) is provided on the irregular portion (40, 41).

7. A micro-device comprising:
a first substrate (400);
a second substrate (300) opposed to the first substrate (400);
a device section (302) placed between the first substrate (400) and the second substrate (300);
a mold member (430) provided so as to enclose the device section (302) between the first substrate (400) and the second substrate (300); and
an irregular portion (340, 440) formed, on at least one of the first substrate (400) and the second substrate (300), over an entire region on which the mold member (430) is arranged,
wherein the mold member (430) is provided on the irregular portion (340, 440).
